Europäisches Patentamt

European Patent Office

Office européen des brevets

(11) Numéro de publication: **0 179 504 B1**

## FASCICULE DE BREVET EUROPEEN

(45) Date de publication de fascicule du brevet:
**29.05.91**

(21) Numéro de dépôt: **85201485.1**

(22) Date de dépôt: **18.09.85**

(51) Int. Cl.⁵: **G11B 5/41, G11B 23/02**

(54) **Distributeur d'agent de nettoyage pour disquette de nettoyage des têtes magnétiques d'unités de disquettes.**

(30) Priorité: **26.10.84 BE 213906**

(43) Date de publication de la demande:
**30.04.86 Bulletin 86/18**

(45) Mention de la délivrance du brevet:
**29.05.91 Bulletin 91/22**

(84) Etats contractants désignés:
**AT CH DE FR GB IT LI LU NL SE**

(56) Documents cités:
**US-A- 4 218 155**

(73) Titulaire: **Gdalewicz, Benedykt**
**Résidence "Minerve" Avenue Brugmann 32**
**B-1060 Bruxelles(BE)**

(72) Inventeur: **Gdalewicz, Benedykt**
**Résidence "Minerve" Avenue Brugmann 32**
**B-1060 Bruxelles(BE)**

(74) Mandataire: **Pieraerts, Jacques et al**
**Bureau Gevers S.A. Rue de Livourne 7, B.1**
**B-1050 Bruxelles(BE)**

Rank Xerox (UK) Business Services

## Description

La présente invention a pour objet un distributeur d'agent de nettoyage, en particulier d'agent de nettoyage à base de solvant, pour disquette de nettoyage des têtes magnétiques d'unités de disquettes constituée de la disquette proprement dite et d'une jaquette de protection de cette dernière présentant sur au moins une de ses deux faces une ouverture radiale à travers laquelle apparaît la disquette et à travers laquelle l'agent de nettoyage est déposé sur celle-ci.

Pour distribuer l'agent de nettoyage sur les disquettes de nettoyage du type susdit, on utilise actuellement soit une bouteille contenant cet agent et dont on déverse une partie du contenu sur la disquette à travers l'ouverture pratiquée dans la jaquette, soit un agent sous forme d'aérosol que l'on projette sur la disquette à travers ladite ouverture.

Cette façon de procéder présente de graves inconvénients dont les principaux sont les suivants : risque pratiquement inévitable, lors du déversement ou de la projection de l'agent de nettoyage sur la disquette, d'entraîner des particules en suspension dans l'air qui seront fixées par l'agent de nettoyage sur la disquette de nettoyage, introduites dans la jaquette de protection de celle-ci et qui pourront endommager les têtes magnétiques à nettoyer; impossibilité, d'une part, de doser correctement la quantité d'agent de nettoyage déversé ou projeté sur la disquette et, d'autre part, de répartir correctement ledit agent de nettoyage sur toute la zone de la disquette apparaissant à travers l'ouverture présentée par la jaquette; risque important de projections d'agent de nettoyage sur la jaquette dans la zone de l'ouverture présentée par celle-ci et risque de fixation de particules étrangères sur les bords de ladite ouverture, particules qui pourront être entraînées et fixées sur la disquette de nettoyage lors de la rotation de cette dernière et enfin modification des propriétés de l'agent de nettoyage, au fur et à mesure de son utilisation, due notamment à l'évaporation du solvant.

L'invention a pour but de remédier à ces inconvénients et de procurer un distributeur d'agent de nettoyage permettant de doser et de répartir correctement cet agent sur la disquette de nettoyage tout en évitant, d'une part, de répandre cet agent de nettoyage sur la jaquette et, d'autre part, d'entraîner, lors du déversement de l'agent de nettoyage, des particules étrangères qui se fixeraient sur la disquette de nettoyage et pénètreraient à l'intérieur de la jaquette de protection de cette dernière.

A cet effet, suivant l'invention, ledit distributeur est profilé, au voisinage de son orifice de vidange, d'une part, de manière à ce que cet orifice puisse être introduit dans l'ouverture susdite, présentée par la jaquette de la disquette, pour distribuer l'agent de nettoyage sur la disquette à l'intérieur de ladite jaquette et, d'autre part, de manière à ce que, lorsque ledit orifice de vidange est introduit dans l'ouverture susdite, ledit distributeur masque l'entièreté de l'ouverture présentée par la jaquette.

Suivant un mode de réalisation avantageux de l'invention, l'orifice de vidange est d'allure rectangulaire, une des dimensions de cet orifice de vidange étant légèrement inférieure à la dimension de l'ouverture précitée de la jaquette prise radialement par rapport à la disquette, tandis que l'autre dimension de l'orifice est inférieure à 1 mm pour que celui-ci puisse être introduit dans la jaquette sans déformations importantes de cette dernière, la section du distributeur étant, à partir de son orifice de vidange, constante sur une distance déterminée, sa dimension, correspondant à la dimension de l'ouverture de la jaquette prise radialement par rapport à la disquette étant, au-delà de cette distance, supérieure à la dimension susdite de l'ouverture de la jaquette afin de limiter la pénétration du distributeur à l'intérieur de la jaquette et de localiser l'orifice dudit distributeur par rapport à ladite ouverture de la jaquette.

Suivant une forme de réalisation particulièrement avantageuse de l'invention, le distributeur est constitué par un récipient dont la contenance correspond à une dose d'agent de nettoyage nécessaire pour une opération de nettoyage.

D'autres détails et particularités de l'invention ressortiront de la description des dessins annexés au présent mémoire et qui représentent, à titre d'exemple non limitatif, une forme de réalisation particulière du distributeur suivant l'invention.

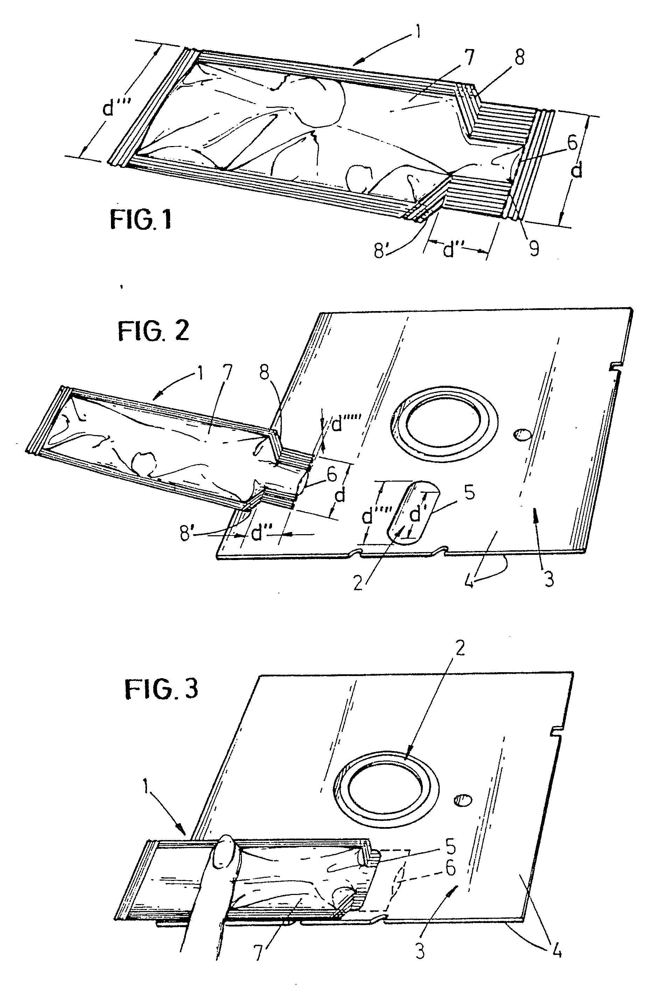

La figure 1 est une vue en perspective d'un distributeur d'agent de nettoyage suivant l'invention.

La figure 2 est une vue en perspective illustrant le distributeur, montré à la figure 1, prêt à l'emploi et une disquette de nettoyage sur laquelle l'agent de nettoyage va être déposé.

La figure 3 est une vue en perspective illustrant le distributeur dont l'orifice de vidange est introduit dans l'ouverture présentée par la jaquette de protection de la disquette de nettoyage, ce distributeur étant en cours de vidange.

Dans les différentes figures, les mêmes notations de référence désignent des éléments identiques.

Le distributeur 1 d'agent de nettoyage, suivant l'invention et illustré aux dessins, est destiné à appliquer l'agent de nettoyage, à base de solvant, sur une disquette de nettoyage 2 des têtes magnétiques d'unités de disquettes, cette disquette 2 étant constituée de la disquette proprement dite et d'une jaquette de protection 3 de cette dernière présentant, sur au moins une de ses faces 4, une ouverture radiale 5 à travers laquelle apparaît la disquette et à travers laquelle l'agent de nettoyage est déposé sur ladite disquette.

Le distributeur 1 est profilé, au voisinage de son orifice de vidange 6, de manière à ce que ce dernier puisse être introduit dans l'ouverture 5 de la jaquette 3 pour distribuer l'agent de nettoyage sur la disquette 2 à l'intérieur de la jaquette. Pour éviter que des particules étrangères en suspension dans l'air puissent atteindre la disquette 2, à travers l'ouverture 5, pendant que l'agent de nettoyage est déposé sur la disquette, ledit distributeur 1 est profilé, au voisinage de son orifice 6, de manière à ce que, lorsque cet orifice est introduit dans ladite ouverture 5, le distributeur masque l'entièreté de cette ouverture 5.

Pour obtenir un dosage parfait de l'agent de nettoyage, le distributeur 1 est constitué par un récipient 7 dont la contenance correspond à une dose d'agent de nettoyage nécessaire à une opération de nettoyage.

Pour que l'agent de nettoyage soit déversé, à l'intérieur de la jaquette 3, en un endroit bien déterminé et sur une zone bien déterminée par rapport au centre de la disquette 2, le distributeur a, au niveau de l'orifice de vidange 6, une section rectangulaire dont la dimension d est légèrement inférieure à la dimension d' de l'ouverture 5 pour permettre son introduction dans cette dernière et pour que l'agent de nettoyage soit distribué sur une zone de la disquette centrée par rapport à l'ouverture 5, la section dudit distributeur étant, à partir de son orifice de vidange 6, sensiblemenmt constante sur une distance déterminée d'', tandis que sa dimension, au-delà de cette distance d'', s'accroît progressivement, en 8 et 8', pour atteindre une dimension d''' supérieure à la dimension d'''' de l'ouverture 5 de la jaquette, ce qui permet de régler la profondeur d'introduction de l'orifice 6 dans la jaquette 3. Les parties 8 et 8' du distributeur viennent en contact avec le bord de l'ouverture 5, lorsque l'orifice de vidange 6 est introduit dans la jaquette, pour régler de manière précise la position de l'orifice de vidange 6 par rapport à l'ouverture 5, tout en centrant automatiquement cet orifice par rapport à ladite ouverture, et la partie du distributeur située en dehors de la jaquette couvre l'entièreté de ladite ouverture 5 pour éviter le dépôt de corps étrangers sur la disquette. La dimension d''''' de l'orifice de vidange 6 n'excède pas 1 mm pour éviter la déformation de la jaquette 3 lors de l'introduction dudit orifice dans cette dernière.

Le récipient 7 est avantageusement constitué par un sachet, étanche et souple, réalisé en un matériau composite aluminium, polyester et polyéthylène, ce sachet présentant, pour former l'orifice de vidange 6, une ligne d'affaiblissement 9 du matériau le long de laquelle le sachet peut facilement être déchiré manuellement. La structure du sachet permet d'éviter toute évaporation du solvant de l'agent de nettoyage. Cette absence d'évaporation, due à la parfaite étanchéité du sachet, associée au fait que ce dernier contient une dose unique d'agent nécessaire à une opération de nettoyage, garantit de toujours disposer d'un agent de nettoyage, tel que mélange de trichlorofluoroéthane et d'alcool isopropyle, ayant conservé toutes ses propriétés.

Il doit être entendu que l'invention n'est nullement limitée à la forme de réalisation décrite et que bien des modifications peuvent être apportées à cette dernière sans sortir du cadre du présent brevet.

C'est ainsi que l'on pourrait notamment prévoir un distributeur de grande contenance muni d'un embout obturable agencé pour pouvoir être introduit à l'intérieur de la jaquette 3 à travers l'ouverture 5 présentée par cette dernière, cet embout étant avantageusement profilé pour masquer la totalité de l'ouverture 5 lorsqu'il est engagé dans celle-ci.

## Revendications

1. Distributeur (1) d'agent de nettoyage, en particulier d'agent de nettoyage à base de solvant, pour disquette de nettoyage (2) des têtes magnétiques d'unités de disquettes constituée de la disquette proprement dite et d'une jaquette de protection (3) de cette dernière présentant sur au moins une de ses deux faces (4) une ouverture radiale (5) à travers laquelle apparaît la disquette et à travers laquelle l'agent de nettoyage est déposé sur celle-ci, ledit distributeur (1) étant caractérisé en ce qu'il est profilé, au voisinage de son orifice de vidange (6), d'une part, de manière à ce que cet orifice puisse être introduit dans l'ouverture (5) susdite, présentée par la jaquette (3) de la disquette, pour distribuer l'agent de nettoyage sur la disquette à l'intérieur de ladite jaquette et, d'autre part, de manière à ce que, lorsque l'orifice de vidange (6) est introduit dans l'ouverture (5) susdite, ledit distributeur masque l'entièreté de l'ouverture (5) présentée par la jaquette (3).

2. Distributeur suivant la revendication 1, caractérisé en ce que son orifice de vidange (6) est d'allure rectangulaire, une des dimensions (d) de cet orifice de vidange étant légèrement inférieure à la dimension (d') de l'ouverture (5) précitée de la jaquette prise radialement par rapport à la disquette, tandis que l'autre dimension (d''''') de l'orifice (6) est inférieur à 1 mm pour que celui-ci puisse être introduit dans la jaquette (3) sans déformation importante de cette dernière.

3. Distributeur suivant la revendication 2, caractérisé en ce que la section du distributeur est, à partir de son orifice de vidange (6), constante sur une distance déterminée (d''), sa dimension (d'''), correspondant à la dimension (d'''') de l'ouverture (5) de la jaquette prise radialement par rapport à la disquette, étant, au-delà de cette distance, supérieure à la dimension susdite de l'ouverture de la jaquette afin de limiter la pénétration du distributeur à l'intérieur de la jaquette et de localiser l'orifice dudit distributeur par rapport à ladite ouverture de la jaquette.

4. Distributeur suivant l'une quelconque des revendidications 1 à 3, caractérisé en ce qu'il est constitué par un récipient dont la contenance correspond à une dose d'agent de nettoyage nécessaire pour une opération de nettoyage.

5. Distributeur suivant la revendication 4, caractérisé en ce qu'il est constitué par un sachet hermétique réalisé en un matériau composite souple aluminium, polyester et polyéthylène laminé permettant d'éviter l'évaporation du solvant, ce sachet présentant, parallèlement à un de ses bords, une ligne d'affaiblissement (9) du matériau permettant de former l'orifice de vidange (6) susdit par déchirement du sachet le long de ladite ligne d'affaiblissement.

6. Distributeur suivant l'une quelconque des revendications 1 à 5, caractérisé en ce que l'agent de nettoyage est un mélange de trichlorofluoroéthane et d'alcool isopropyle.

## Claims

1. A cleaning agent dispenser (1), in particular for a solvent-based cleaning agent, for a cleaning disc (2) for magnetic heads of disc units, comprising the disc itself and a protective sleeve (3) for the latter having on at least one of its two faces (4) a radial opening (5) through which the disc is visible and through which the cleaning agent is deposited thereon, said dispenser (1) being characterised in that it is shaped in the vicinity of its discharge orifice (6), on the one hand, in such a way that this orifice can be inserted in said opening (5) provided in the sleeve (3) for the disc, so as to dispense the cleaning agent on to the disc inside said sleeve and, on the other hand, in such a way that when the discharge orifice (6) is inserted in said opening (5), said dispenser completely conceals the opening (5) provided in the sleeve (3).

2. A dispenser according to claim 1, characterised in that its discharge orifice (6) is of rectangular appearance, one of the dimensions (d) of this discharge orifice being slightly less than the dimension (d') of said opening (5) of the sleeve measured radially with respect to the disc, whereas the other dimension (d''''') of the orifice (6) is less than 1 mm so hat the orifice can be inserted in the sleeve (3) without substantial deformation thereof.

3. A dispenser according to claim 2, characterised in that, starting from its discharge orifice (6), the cross-section of the dispenser is constant over a given distance (d''), its dimension (d'''), which corresponds to the dimension (d'''') of the sleeve opening (5) measured radially with respect to the disc, being, beyond this distance, greater than said dimension of the sleeve opening so as to limit the penetration of the dispenser inside the sleeve and to locate said dispenser orifice in relation to said sleeve opening.

4. A dispenser according to any one of claims 1 to 3, characterised in that it comprises a receptacle whose capacity corresponds to one dose of the cleaning agent required for one cleaning operation.

5. A dispenser according to claim 4, characterised in that it comprises a hermetically sealed sachet made of a flexible composite laminated material of aluminium, polyester and polyethylene, which makes it possible to prevent evaporation of the solvent, said sachet having, parallel to one of its edges, a weakening line (9) in the material enabling said discharge orifice (6) to be formed by tearing the sachet along said weakening line.

6. A dispenser according to any one of claims 1 to 5, characterised in that the cleaning agent is a mixture of trichlorofluoroethane and isopropyl alcohol.

## Ansprüche

1. Reinigungsmittelausgeber (1), insbesondere von Reinigungsmitteln auf Lösungsmittelbasis Reinigungsdisketten (2) von Magnetköpfen von Disketteneinheiten, gebildet aus der eigentlichen Diskette und einem Schutzumschlag (3), wobei letzterer auf wenigstens einer seiner Seiten (4) eine Radialöffnung (5) aufweist, durch die die Diskette erscheint und durch die das Reinigungsmittel auf jener abgelegt wird, wobei der Ausgeber (1) dadurch gekennzeichnet ist, daß er profiliert ist, in der Nähe seiner Ausleeröffnung (6) einerseits, derart, daß diese Öffnung in die vorgenannte Öffnung (5) eingeführt werden kann, die durch den Schutzumschlag (3) der Diskette gebildet wird, um das Reinigungsmittel auf die Diskette im Inneren des Schutzumschlages auszugeben, und andererseits, derart, daß, wenn die Ausleeröffnung (6) in die vorgenannte Öffnung (5) eingeführt wird, der Ausgeber die Öffnung (5) die durch den Schutzumschlag (3) gebildet wird, Überdeckt.

2. Ausgeber nach Anspruch 1, dadurch gekennzeichnet, daß seine Ausleröffnung (6) von rechteckiger Form ist, wobei eine der Abmessungen (d) dieser Ausleeröffnung etwas geringer ist als die Abmessung (d') der vorgenannten Öffnung (5) des Schutzumschlages, radial bezüglich der Diskette genommen, während die andere Abmessung (d''''') der Öffnung (6) geringer ist als ein Millimeter, damit diese in den Schutzumschlag (3) eingeführt werden kann ohne wesentliche Deformation des letzteren.

3. Ausgeber nach Anspruch 2, dadurch gekennzeichnet, daß der Querschnitt des Ausgebers, ausgehend von einer Ausleeröffnung (6), Über einen vorbestimmten Abstand (d'') konstant ist, wobei seine Abmessung (d'''), die der Abmessung (d'''') der Öffnung (5) des Schutzumschlags entspricht, die radial bezüglich der Diskette genommen ist, Über diesen Abstand hinaus größer ist als die Abmessung der vorgenannten Öffnung des Schutzumschlags, um das Eindringen das Ausgebers in das Innere des Schutzumschlags zu begrenzen und die Öffnung des Ausgebers bezüglich der Öffnung des Schutzumschlages örtlich festzulegen.

4. Ausgeber nach einem der Ansprüche 1 bis 3, dadurch gekennzeichnet, daß er gebildet ist aus einem Behälter, dessen Inhalt einer Dosis von Reinigungsmittel entspricht, die für einen Reinigungsvorgang erforderlich ist.

5. Ausgeber nach Anspruch 4, dadurch gekennzeichnet, daß er gebildet wird aus einem hermetisch geschlossenen Beutel, der aus einem weichen Verbundwerkstoff Aluminium, Polyester und laminiertes Polyethylen gebildet wird, was erlaubt, eine Verdampfung des Lösungsmittels zu verhindern, wobei der Beutel parallel zu einem seiner Ränder eine Schwächungslinie (9) des Materials aufweist, die die Bildung der Ausleeröffnung (6) durch Zerreissen des Beutels entlang der Schwächungslinie erlaubt.

6. Ausgeber nach einem der Ansprüche 1 bis 5, dadurch gekennzeichnet, daß das Reinigungsmittel eine Mischung aus Trichlorfluorethan und Isopropylalkohol ist.

FIG.1

FIG. 2

FIG. 3